# EUROPÄISCHE PATENTSCHRIFT

(11) **EP 1 979 153 B1**
(45) Veröffentlichungstag und Bekanntmachung des Hinweises auf die Patenterteilung: **23.02.2011**
(21) Anmeldenummer: 07702337.2
(22) Anmeldetag: 11.01.2007
(51) Int. Cl.: B29C 49/42, B29C 49/06, B29C 49/12, B29C 49/36, B29C 49/64

(54) **VORRICHTUNG ZUR BLASFORMUNG VON BEHÄLTERN MIT TRANSPORTELEMENTEN MIT ZWEI ZANGENARMEN**
APPARATUS FOR BLOW MOULDING CONTAINERS, COMPRISING TRANSPORT ELEMENTS WITH TWO GRIPPER ARMS
DISPOSITIF DE MOULAGE PAR SOUFFLAGE DE RECIPIENTS DOTE D'ELEMENTS DE TRANSPORT DE TYPE PINCE A DEUX BRAS

(30) Priorität: 24.01.2006 DE 102006003142
(43) Veröffentlichungstag der Anmeldung: 15.10.2008
(73) Patentinhaber: KHS Corpoplast GmbH, 20539 Hamburg (DE)
(72) Erfinder: LINKE, Michael, 22047 Hamburg (DE); LITZENBERG, Michael, 21502 Geesthacht (DE); BAUMGARTE, Rolf, 22926 Ahrensburg (DE); LEWIN, Frank, 22889 Tangstedt (DE)
(74) Vertreter: Klickow, Hans-Henning
(86) Internationale Anmeldenummer: PCT/DE2007/000053
(87) Internationale Veröffentlichungsnummer: WO 2007/085226

(56) Entgegenhaltungen:
- EP-A- 1 375 395
- WO-A-03/099688
- FR-A1- 2 730 659
- JP-A- 53 102 375
- US-A- 4 093 296

## Beschreibung

Die Erfindung betrifft eine Vorrichtung zur Blasformung von Behältern, die eine Heizstrecke zur Erwärmung von vorformlingen aus einem thermoplastischen Material aufweist und die mit einer Blaseinrichtung versehen ist, die mindestens eine Blasstation zur Umformung der Vorformlinge in die Behälter aufweist, sowie bei der zur Handhabung der vorformlinge mindestens ein zangenartiges Transportelement mit zwei Zangenarmen versehen ist, die relativ zu einem zangenträger verschwenkbar angeordnet sind.

Bei einer Behälterformung durch Blasdruckeinwirkung werden vorformlinge aus einem thermoplastischen Material, beispielsweise vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlingen werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bekannt ist die Verwendung von Transportdornen, auf die die Vorformlinge aufgesteckt werden. Die Vorformlinge können aber auch mit anderen Trageinrichtungen gehandhabt werden. Die verwendung von Greifzangen zur Handhabung von Vorformlingen und die Verwendung von Klemmdornen, die zur Halterung in einen Mündungsbereich des Vorformlings einführbar sind, gehören ebenfalls zu den verfügbaren Konstruktionen.

Eine Handhabung von Behältern und Vorformlingen unter verwendung von Übergaberädern wird beispielsweise in der DE-OS 199 06 438 bei einer Anordnung eines Übergaberades zwischen einem Blasrad und einer Ausgabestrecke und eines weiteren Übergaberades zwischen der Heizstrecke und dem Blasrad beschrieben.

Die bereits erläuterte Handhabung der Vorformlinge erfolgt zum einen bei den sogenannten Zweistufenverfahren, bei denen die vorformlinge zunächst in einem Spritzgußverfahren hergestellt, anschließend zwischengelagert und erst später hinsichtlich ihrer Temperatur konditioniert und zu einem Behälter aufgeblasen werden. zum anderen erfolgt eine Anwendung bei den sogenannten Einstufenverfahren, bei denen die Vorformlinge unmittelbar nach ihrer spritzgußtechnischen Herstellung und einer ausreichenden verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig arizutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Die verwendung von zangen zur Handhabung der Vorformlinge kann sowohl ausschließlich als auch in Kombination mit anderen Trag- oder Handhabungselementen erfolgen. Beispielsweise können die Vorformlinge entlang eines Teiles ihres Transportweges von Transportdornen gehaltert werden und entlang mindestens eines weiteren Teiles des Transportweges ist eine Handhabung unter Verwendung von Zangen möglich. Die bislang verwendeten zangen können aber noch nicht alle Anforderungen erfüllen, die an eine schonende und zugleich zuverlässige Handhabung der Vorformlinge gestellt werden.

Die wesentlichen Anforderungen bestehen in einer zuverlässigen und störungssicheren Handhabung der Vorformlinge bei hohen Förderraten an Vorformlingen je Zeiteinheit. Zweckmäßigerweise sollen die Zangen sowohl zur Handhabung von Vorformlingen als auch zur Handhabung von geblasenen Flaschen geeignet sein. Darüber hinaus sollen mechanische Beschädigungen der Vorformlinge als Folge der Handhabung durch die zangen vermieden bzw. minimiert werden.

Aus der WO 03/099688A ist bereits eine Vorrichtung zur Blasformung bekannt, bei der vorformlinge und Behälter unter verwendung von zangenartigen Transportelementen beaufschlagt werden. Die Transportelemente besitzen jeweils zwei Zangenarme, die relativ zu einem Zangenträger verschwenkbar angeordnet sind.

In der EP-A-1 375 395 wird ebenfalls ein zangenartiges Transportelement für Flaschen beschrieben, das zwei Zangenarme aufweist, die relativ zu einem Zangenträger verschwenkbar angeordnet sind. In einem geschlossenen zustand der Zange wird die geschlossene Positionierung durch zwei aufeinander einwirkende Permanentmagnete stabilisiert, so daß es nicht erforderlich ist, externe Haltekräfte aufzubringen. In einem vollständig geöffneten Zustand befinden sich Hebel der zangenarme in einer Übertotpunktlage, so daß auch hier keine externen Kräfte für eine Aufrechterhaltung des Zustandes erforderlich sind. Eine Krafteinwirkung ist somit nur bei einem Zustandswechsel der Zange erforderlich.

Aufgabe der vorliegenden Erfindung ist es, eine Vorrichtung der einleitend genannten Art derart zu konstruieren, daß ein zuverlässiger Transport der vorformlinge bei hoher Transportgeschwindigkeit unterstützt wird.

Diese Aufgabe wird erfindungsgemäß dadurch gelöst, daß jeder der Zangenarme über jeweils mindestens einen Hebel verschwenkbar mit einem zentralelement gekoppelt ist, das mindestens bereichsweise zwischen den Zangenarmen angeordnet ist und daß jeder der Zangenarme von mindestens einer Feder federnd gegenüber dem Zentralelement verspannt ist und daß das zentralelement beweglich relativ zum zangenträger geführt ist.

Die Anordnung des Zentralelementes zwischen den Zangenarmen ermöglicht ein automatisches Schließen der Zangenarme unmittelbar durch ein Einführen des Vorformlings zwischen die zangenarme und einen hieraus resultierenden Druck auf das Zentralelement. Ebenfalls ist es in einfacher weise möglich, für eine Freigabe der Vorformlinge das zentralelement zu positionieren und hierdurch sowohl eine Aufschwenkbewegung der Zangenarme als auch eine Ausgabe der Vorformlinge durchzuführen. Die vorstehend und nachfolgend aufgeführte Handhabung der Vorformlinge unter Verwendung der Zangenarme bezieht sich in gleicher Weise auch auf die Handhabung von geblasenen Behältern, ohne daß hierauf jedesmal separat hingewiesen wird. Durch die federnde Verspannung der Zangenarme relativ zum Zentralelement wird eine automatische Halterung der Vorformlinge bzw. Flaschen ohne Verwendung separater verriegelungen oder aktiver Betätigungselemente unterstützt.

Eine einfache Bewegungskopplung wird dadurch unterstützt, daß die Hebel schräg zu einer Zentrallängsachse des Zentralelementes angeordnet sind.

Insbesondere ist daran gedacht, daß die Hebel in eine dem Zangenträger abgewandte Richtung schräg nach vorne weisend angeordnet sind.

Zu einer Stabilisierung vorgegebener Positionierungen der Zangenarme trägt es bei, daß die Federn mit Federlängsachsen schräg zur Zentrallängsachse angeordnet sind.

Als besonders vorteilhaft erweist es sich, daß die Federlängsachsen in eine dem Zangenträger abgewandte Richtung schräg nach vorne weisend angeordnet sind.

Eine kompakte Konstruktion wird dadurch unterstützt, daß das Zentralelement beweglich relativ zum Zangenträger geführt ist.

Eine hohe mechanische Stabilität in einem Schließzustand kann dadurch erreicht werden, daß das Zentralelement in einem seitlichen Bereich eine stufenförmige Kontur aufweist und daß die Zangenarme eine an die Kontur des Zentralelements angepaßte Außenkontur aufweisen.

Eine schonende Handhabung der Vorformlinge wird dadurch unterstützt, daß die Zangenarme im Bereich ihrer dem Zangenträger abgewandten Ausdehnung eine an den Vorformling angepaßte Halterungskontur aufweisen.

Ebenfalls trägt es zu einer einfachen Steuerbarkeit sowie zu einer schonenden Handhabung der Vorformlinge bei, daß das Zentralelement im Bereich seiner dem Zangenträger abgewandten Ausdehnung eine an die Außengeometrie des Vorformlings angepaßte Andruckfläche aufweist.

Eine externe Steuerbarkeit des Transportelementes wird dadurch bereit gestellt, daß das Zentralelement einen an eine Kurvensteuerung angepaßten Abnehmer aufweist.

Eine einfache mechanische Konstruktion wird dadurch unterstützt, daß die Kurvensteuerung ausschließlich zur Vorgabe einer Öffnungsbewegung des Transportelementes ausgebildet ist.

Eine Zustandsstabilisierung in einer Halterungspositionierung des Transportelementes wird dadurch erreicht, daß die Federlängsachse in einem Schließzustand des Transportelementes derart schräg zur Hebellängsachse angeordnet ist, daß die Federlängsachse mindestens bereichsweise zwischen der Hebellängsachse und der Zentrallängsachse verläuft.

Eine weitere Zustandsstabilisierung in einer Öffnungspositionierung des Transportelementes wird dadurch erreicht, daß die Federlängsachse in einem Öffnungszustand des Transportelementes mindestens bereichsweise relativ zur zentrallängsachse außenseitig neben der Hebellängsachse verläuft.

In den Zeichnungen sind Ausführungsbeispiele der Erfindung schematisch dargestellt. Es zeigen:
- Fig. 1: Eine perspektivische Darstellung einer Blassta- tion zur Herstellung von Behältern aus Vorform- lingen,
- Fig. 2: einen Längsschnitt durch eine Blasform, in der ein Vorformling gereckt und expandiert wird,
- Fig. 3: eine Skizze zur Veranschaulichung eines grund- sätzlichen Aufbaus einer Vorrichtung zur Blas- formung von Behältern,
- Fig. 4: eine modifizierte Heizstrecke mit vergrößerter Heizkapazität,
- Fig. 5: eine perspektivische Darstellung eines Trans- portelementes mit zwei Zangenarmen und einem Zentralelement in einem geschlossenen Zustand der Zange,
- Fig. 6: die Anordnung gemäß Fig. 5 nach einem Öffnen der Zange,
- Fig. 7: die Anordnung gemäß Fig. 5 in einer Draufsicht,
- Fig. 8: die Anordnung gemäß Fig. 6 in einer Draufsicht.

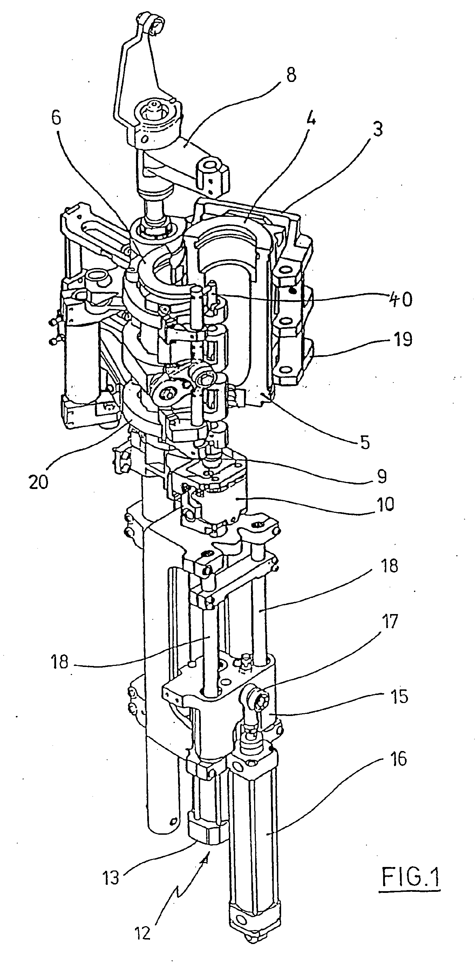

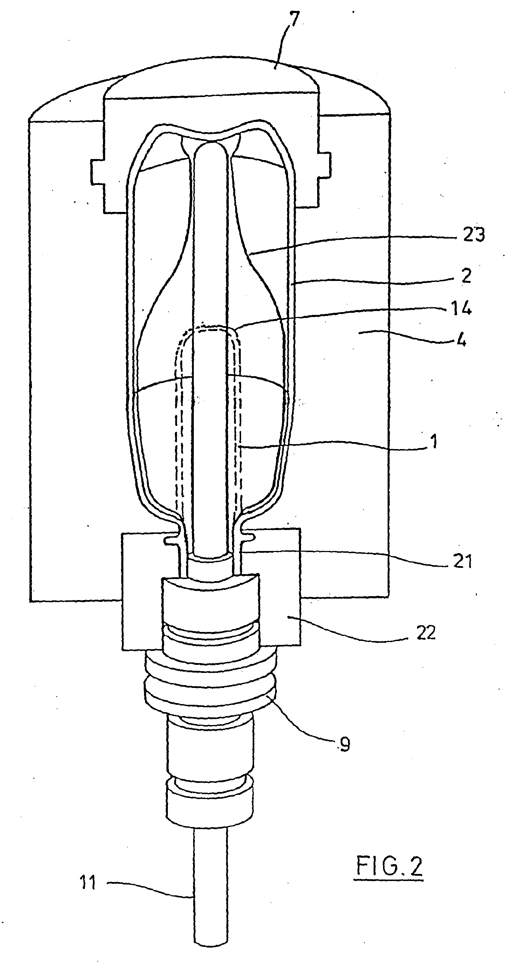

Der prinzipielle Aufbau einer Vorrichtung zur Umformung von Vorformlingen (1) in Behälter (2) ist in Fig. 1 und in Fig. 2 dargestellt. Die Anordnung kann dabei wie dargestellt oder in einer vertikalen Ebene um 180° gedreht erfolgen.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Halteelement (9) fixiert sein. Es ist beispielsweise möglich, den Vorformling (1) über Zangen oder andere Handhabungsmittel direkt in die Blasform (4) einzusetzen.

Zur Ermöglichung einer Druckluftzuleitung ist unterhalb der Blasform (4) ein Anschlußkolben (10) angeordnet, der dem Vorformling (1) Druckluft zuführt und gleichzeitig eine Abdichtung vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad (25) angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

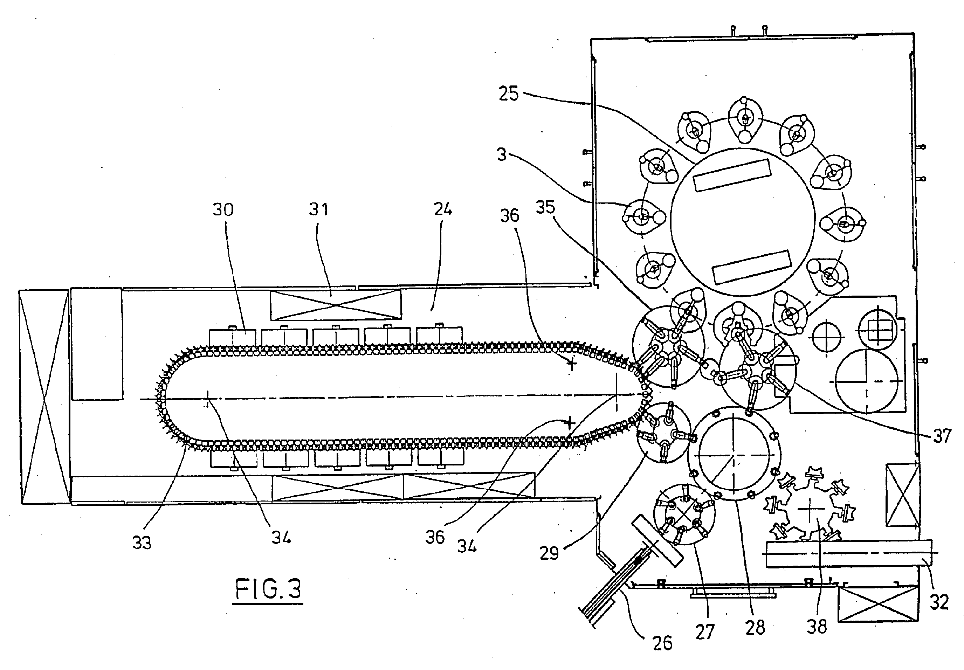

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der vorformlinge (1) werden diese an das Blasrad (25) übergeben, in dessen Bereich die Blasstationen (3) angeordnet sind. Die fertig geblasenen Behälter (2) werden von Übergaberädern (37, 28, 38) einer Ausgabestrecke (32) zugeführt.

Um einen Vorformling (1) derart in einen Behälter (2) umformen zu können, daß der Behälter (2) Materialeigenschaften aufweist, die eine lange verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimen-sionierungsvorschriften erzielt werden.

Als thermoplastisches Material können unterschiedliche Kunststoffe verwendet werden. Einsatzfähig sind beispielsweise PET, PEN oder PP.

Die Expansion des vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesent-lichen rechteckförmige Grundkontur aufzuspannen. Bei der dargestellten Ausführungsform werden im Bereich der dem Übergaberad (27) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (27) und des Blasrades (25) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (27) und zum Blasrad (25). Alternativ zur verwendung von kettenartigen Transportelementen (33) ist es beispielsweise auch möglich, ein rotierendes Heizrad zu verwenden.

Nach einem fertigen Blasen der Behälter (2) werden diese vom Übergaberad (38) aus dem Bereich der Blasstationen (3) herausgeführt und zur Ausgabestrecke (32) transportiert.

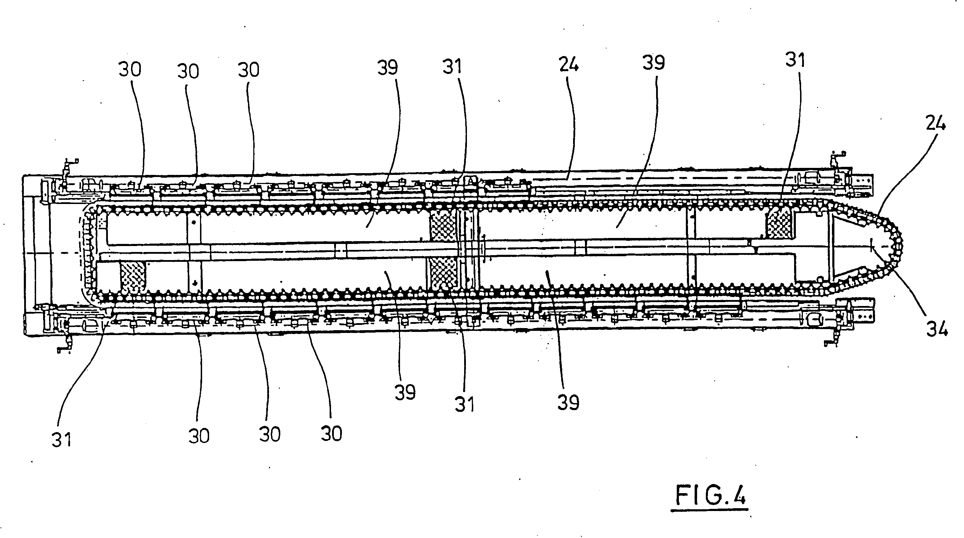

In der in Fig. 4 dargestellten modifizierten Heizstrekke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

Ein Transport der Vorformlinge (1) und der Behälter (2) durch die Blasmaschine kann in unterschiedlicher Art und Weise erfolgen. Gemäß einer Ausführungsvariante werden die Vorformlinge zumindest entlang des wesentlichen Teiles ihres Transportweges von Transportdornen getragen. Es ist aber auch möglich, einen Transport der Vorformlinge unter verwendung von Zangen durchzuführen, die außenseitig am Vorformling angreifen, oder Innendorne zu verwenden, die in einen Mündungsbereich des Vorformlings eingeführt werden. Ebenfalls sind hinsichtlich der räumlichen Orientierung der Vorformlinge unterschiedliche Varianten denkbar.

Gemäß einer Variante wird der Vorformling im Bereich der Vorformlingseingabe (26) mit seiner Mündung in lotrechter Richtung nach oben orientiert zugeführt, anschließend gedreht, entlang der Heizstrecke (24) und des Blasrades (25) mit seiner Mündung in lotrechter Richtung nach unten orientiert gefördert und vor einem Erreichen der Ausgabestrecke (32) wieder gedreht. Gemäß einer anderen Variante wird der Vorformling (2) im Bereich der Heizstrecke (24) mit seiner Mündung in lotrechter Richtung nach unten orientiert beheizt, vor Erreichen des Blasrades (25) jedoch wieder um 180° gedreht.

Gemäß einer dritten Ausführungsvariante durchläuft der vorformling den gesamten Bereich der Blasmaschine ohne Durchführung von Wendevorgängen mit seiner Mündung in lotrechter Richtung nach oben orientiert.

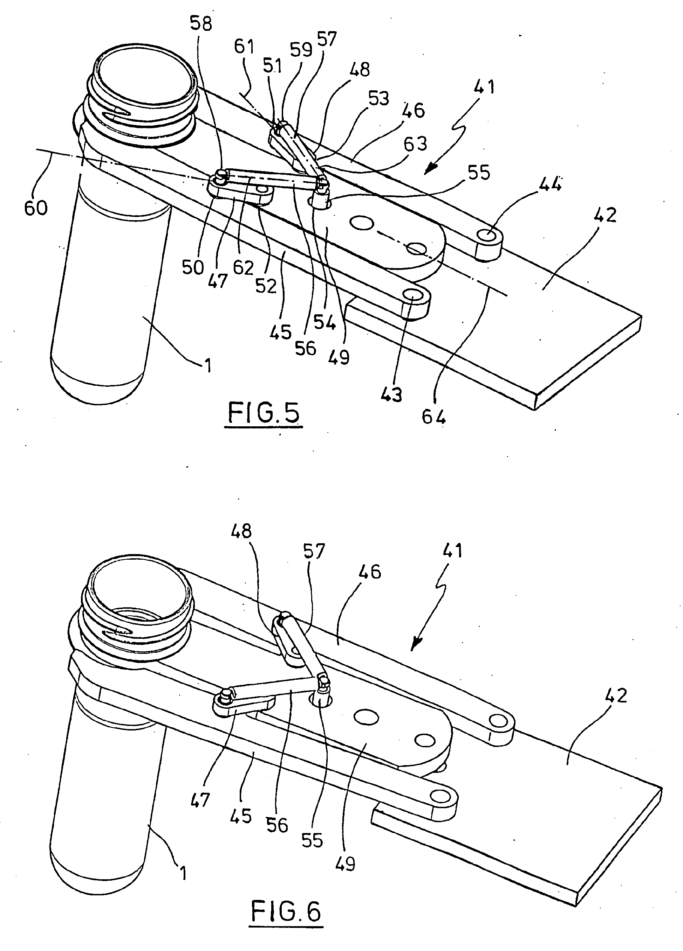

Fig. 5 zeigt in einer perspektivischen Darstellung einen von einem zangenartigen Transportelement (41) gehalterten Vorformling (1). In ähnlicher Art und Weise kann das Transportelement (41) auch einen geblasenen Behälter (2) positionieren. Das Transportelement (41) weist einen Zangenträger (42) auf, der über Schwenkgelenke (43, 44) mit Zangenarmen (45, 46) verbunden ist. Die Zangenarme (45, 46) sind über Hebel (47, 48) mit einem Zentralelement (49) gekoppelt. Die Hebel (47, 48) sind von Schwenkgelenken (50, 51) mit den Zangenarmen (45, 46) und von Schwenkgelenken (52, 53) mit dem Zentralelement (49) verbunden. Das Zentralelement (49) weist eine Ausnehmung (54) auf, in die ein mit dem Zangenträger (42) verbundenes Halteelement (55) eingesetzt ist. Gemäß einer alternativen Ausführungsform kann das Halteelement (55) mit dem Zentralelement (49) auch einteilig verbunden sein.

Mindestens eines der Schwenkgelenke (43, 44, 50, 51, 52, 53) kann als Zapfen-Ausnehmungs-Kombination, Scharnier, Filmgelenk oder Festkörpergelenk realisiert sein. Bei einer Verwendung von Filmgelenken oder Festkörpergelenken ist es möglich, alle Bauteile des Transportelementes (41) mit Ausnahme der Federn (56, 57) einteilig auszubilden oder einige der Bauteile zu einer oder mehreren Modulen zusammenzufassen.

Die Zangenarme (45, 46) sind zusätzlich über Federn (56, 57) mit dem Haltelement (55) verbunden. Vorzugsweise sind die Federn (56, 57) als Zugfedern ausgebildet und werden im Bereich ihrer dem Halteelement (55) abgewandten Ausdehnung von Zapfen (58, 59) gehaltert, die als Verlängerung der Schwenkgelenke (50, 51) angeordnet sind.

Fig. 5 zeigt das Transportelement (41) in einem geschlossenen Zustand, in dem der Vorformling (1) von den Zangenarmen (45, 46) gehaltert ist. Durch die Federn (55, 57) werden die Zangenarme (45, 46) sowie das Zentralelement (49) in der dargestellten Schließstellung stabilisiert. Es ist insbesondere zu erkennen, daß sowohl die Hebel (47, 48) mit Hebellängsachsen (60, 61) als auch die Federn (56, 57) mit Federlängsachsen (62, 63) schräg zu einer Zentrallängsachse (64) des Zentralelementes (49) angeordnet sind. Die Hebellängsachsen (60, 61) und die Federlängsachsen (62, 63) erstrecken sich hierbei bezüglich der Zentrallängsachse (64) in Richtung auf den Vorformling (1) schräg nach vorne weisend.

Bei der in Fig. 5 dargestellten Ausführungsform stellt die Zentrallängsachse (64) eine Symmetrieachse des Transportelementes (41) dar. Das Zentralelement (49) ist hierbei zwischen den Zangenarmen (45, 46) angeordnet und die Zangenarme (45, 46) liegen in der dargestellten Schließstellung seitlich am Zentralelement (49) an.

Fig. 6 zeigt die Anordnung gemäß Fig. 5 nach der Durchführung einer Öffnungsbewegung der Zangenarme (45, 46). Gemäß dem hier gezeigten Ausführungsbeispiel ist das Halteelement (55) starr mit dem Zentralelement (49) verbunden und wird gemeinsam mit dem Zentralelement (49) relativ zum Zangenträger (45) verschoben. Die Verschiebung kann beispielsweise durch eine externe Kurvensteuerung erfolgen. Durch die Positionierbewegung des Zentralelementes (49) werden die Hebel (47, 48) und damit auch die Zangenarme (45, 46) verschwenkt und geben den Vorformling (1) frei.

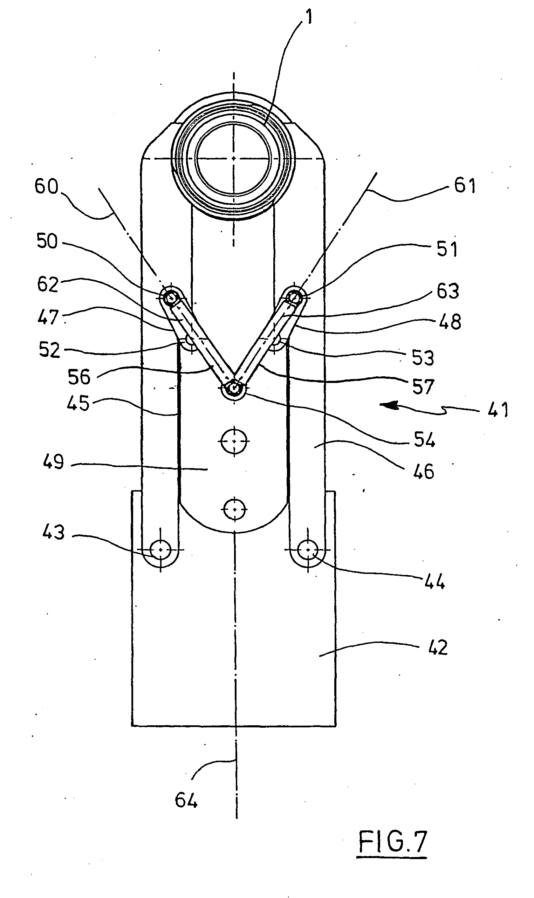

Fig. 7 zeigt zur weiteren Veranschaulichung des Funktionsprinzips die Anordnung gemäß Fig. 5 in einer Draufsicht. Es ist hierbei insbesondere zu erkennen, daß die Hebelängsachsen (60, 61) und die Federlängsachsen (62, 63) schräg zueinander angeordnet sind. Die Federn (56, 57) ziehen hierdurch die Zangenarme (45, 46) gegen das Zentralelement (49) und führen zu einer Halterung des Vorformlings (1) durch das Transportelement (41). Die Hebel (47, 48) befinden sich bei der dargestellten Positionierung in einer Übertotpunktlage, so daß eine durch die Federkraft verursachte Verschiebung des Zentralelementes (49) in Richtung der Zentrallängsachse (64) den Schließzustand des Transportelementes (41) stabilisiert.

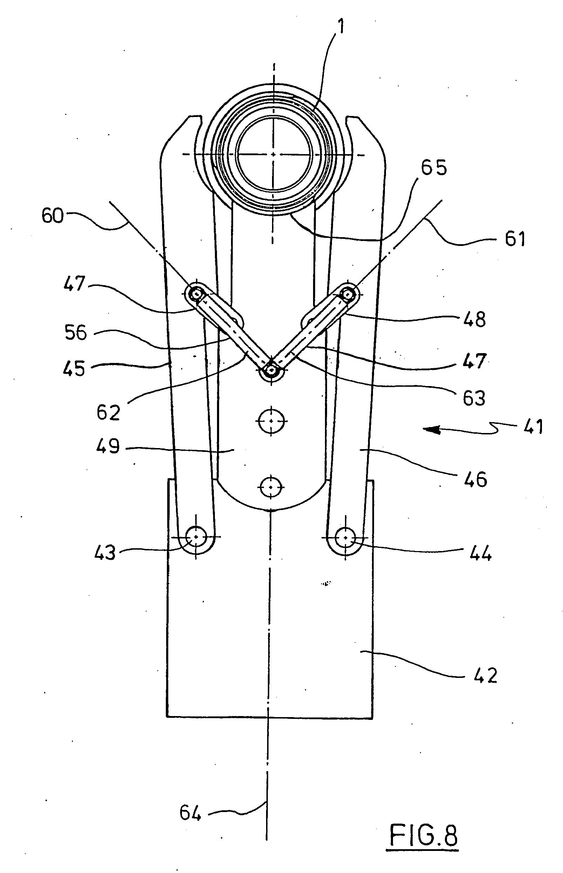

Fig. 8 zeigt die Anordnung gemäß Fig. 7 nach einem Öffnen des Transportelementes (41) zur Durchführung einer Freigabe des Vorformlings (1). Das Zentralelement (49) wurde hierbei durch eine externe Stellkraft in Richtung der Zentrallängsachse (64) verschoben und verursacht aufgrund der Kopplung über die Hebel (47, 48) eine Öffnung der Zangenarme (45, 46). In der dargestellten Positionierung sind die Hebellängsachsen (60, 61) und die Federlängsachsen (62, 63) wiederum schräg relativ zueinander angeordnet. Hinsichtlich der Hebel (47, 48) erfolgt die Schrägstellung jedoch gegenüber der Positionierung in Fig. 7 auf einer jeweils gegenüberliegenden Seite der Hebel (47, 48). Aufgrund der in Fig. 8 dargestellten Anordnung der Hebellängsachsen (60, 61) und der Federlängsachsen (62, 63) führt die Kraft der Federn (56, 57) zu einer Stabilisierung der dargestellten Öffnungspositionierung, so daß auch dieser Zustand ohne Einwirkung externer Kräfte beibehalten wird.

Die in den Figuren veranschaulichte Konstruktion des Transportelementes (61) führt somit zu einer äußerst einfache Steuerung des Transportelements (41). Ausgehend von der Darstellung in Fig. 8 kann bei einer Eingabe des Vorformlings (1) eine Schließbewegung in einfacher Weise durch einen unmittelbaren Druckkontakt des Vorformlings (1) auf eine Andruckfläche (65) des Zentralelementes (49) vorgegeben werden. Die Kontur der Andruckfläche (65) wird vorzugsweise an eine Außenkontur des Vorformlings (1) im vorgesehenen Andruckbereich angepaßt. Relativbewegungen zwischen dem Vorformling (1) und der Andruckfläche (65) können vermieden werden. Mit einer äußerst geringen Stellkraft kann der Vorformling (1) das Zentralelement (49) leicht in Richtung auf den Zangenträger (42) bewegen und eine abschließende Schließbewegung erfolgt aufgrund der Kraft der Federn (56, 58). Alternativ zu einer unmittelbaren Verstellung durch den Vorformling (1) bzw. den geblasenen Behälter (2) kann selbstverständlich auch eine Positionierung des Zentralelementes (49) durch eine Kurvensteuerung oder andere geeignete Positionierelemente erfolgen.

Eine Überführung des Transportelementes (41) aus dem Schließzustand gemäß Fig. 7 in den Öffnungszustand gemäß Fig. 8 kann ebenfalls wiederum mit geringem Kraftaufwand erfolgen, da lediglich der erste Teil der Öffnungsbewegung gesteuert werden muß nach einem Überschreiten einer Überdeckung der Hebellängsachsen (60, 61) und der Federlängsachsen (62, 63) eine Beendigung der Öffnungsbewegung durch die Kraft der Federn (56, 57) erfolgt.

Das Transportelement (41) ermöglicht eine Durchführung symmetrischer Öffnungsgedanken/Schließbewegungen und vermeidet Reibeinwirkungen auf den Vorformling (1).

## Patentansprüche

1. vorrichtung zur Blasformung von Behältern (2), die eine Heizstrecke (24) zur Erwärmung von Vorfonnlingen (1) aus einem thermoplastischen Material aufweist und die mit einer Blaseinrichtung versehen ist, die mindestens eine Blasstation (3) zur Umformung der Vorformlingen (1) in die Behälter (2) aufweist, sowie bei der zur Handhabung der vorformlinge (1) mindestens ein zangenartiges Transportelement (41) mit zwei Zangenarmen (45, 46) versehen ist, die relativ zu einem Zangenträger (42) verschwenkbar angeordnet sind, **dadurch gekennzeichnet, daß** jeder der Zangenarme (45, 46) über jeweils mindestens einen Hebel (47, 48) verschwenkbar mit einem zentralelement (49) gekoppelt ist, das mindestens bereichsweise zwischen den Zangenarmen (45, 46) angeordnet ist und daß jeder der Zangenarme (45, 46) von mindestens einer Feder federnd gegenüber dem Zentralelement (49) verspannt ist und daß das Zentralelement (49) beweglich relativ zum Zangenträger (42) geführt ist.

2. Vorrichtung nach Anspruch 1, **dadurch gekennzeichnet, daß** die Hebel (47, 48) schräg zu einer Zentrallängsachse (64) des Zentralelementes (49) angeordnet sind.

3. Vorrichtung nach Anspruch 1 oder 2, **dadurch gekennzeichnet, daß** die Hebel (47, 48) in eine dem Zangenträger (45) abgewandte Richtung schräg nach vorne weisend angeordnet sind.

4. Vorrichtung nach einem der Ansprüche 1 bis 3, **dadurch gekennzeichnet, daß** die Federn (56, 57) mit Federlängsachsen (62, 63) schräg zur zentrallängsachse (64) angeordnet sind.

5. Vorrichtung nach einem der Ansprüche 1 bis 4, **dadurch gekennzeichnet, daß** die Federlängsachsen (62, 63) in eine dem Zangenträger (42) abgewandte Richtung schräg nach vorne weisend angeordnet sind.

6. Vorrichtung nach einem der Ansprüche 1 bis 5, **dadurch gekennzeichnet, daß** das zentralelement (49) in einem seitlichen Bereich eine stufenförmige Kontur aufweist und daß die Zangenarme (45, 46) eine an die Kontur des Zentralelementes (49) angepaßte Außenkontur aufweisen.

7. Vorrichtung nach einem der Ansprüche 1 bis 6, **dadurch gekennzeichnet, daß** die Zangenarme (45, 46) im Bereich ihrer dem Zangenträger abgewandten Ausdehnung eine an den Vorformlinge (1) angepaßte Halterungskontur aufweisen.

8. Vorrichtung nach einem der Ansprüche 1 bis 7, **dadurch gekennzeichnet, daß** das Zentralelement (49) im Bereich seiner dem zangenträger (42) abgewandten Ausdehnung eine an die Außengeometrie des vorformlings (1) angepaßte Andruckfläche (65) aufweist.

9. Vorrichtung nach einem der Ansprüche 1 bis 8, **dadurch gekennzeichnet, daß** das Zentralelement (49) einen an eine Kurvensteuerung angepaßten Abnehmer aufweist.

10. Vorrichtung nach einem der Ansprüche 1 bis 9, **dadurch gekennzeichnet, daß** die Kurvensteuerung ausschließlich zur vorgabe einer Öffnungsbewegung des Transportelementes (41) ausgebildet ist.

11. Vorrichtung nach einem der Ansprüche 1 bis 10, **dadurch gekennzeichnet, daß** die Federlängsachse (62, 63) in einem Schließzustand des Transportelementes (41) derart schräg zur Hebellängsachse (60, 61) angeordnet ist, daß die Federlängsachse (62, 63) mindestens bereichsweise zwischen der Hebellängsachse (60, 61) und der Zentrallängsachse (64) verläuft.

12. Vorrichtung nach einem der Ansprüche 1 bis 11, **dadurch gekennzeichnet, daß** die Federlängsachse (62, 63) in einem öffnungszustand des Transportelementes (41) mindestens bereichsweise relativ zur zentrallängsachse (64) außenseitig neben der Hebellängsachse (60, 61) verläuft.

## Claims

1. Apparatus for blow moulding containers (2), which has a heating section (24) for heating preforms (1) of a thermoplastic material and which is provided with a blowing device which has at least one blowing station (3) for reshaping the preforms (1) into the containers (2), and in which at least one gripper-like transport element (41) having two gripper arms (45, 46), which are arranged pivotably relative to a gripper carrier (42), is provided for handling the preforms (1), **characterised in that** each of the gripper arms (45, 46) is pivotably coupled to a central element (49) by way of at least one lever (47, 48) in each case, which central element is arranged at least partially between the gripper arms (45, 46), and **in that** each of the gripper arms (45, 46) is braced resiliently with respect to the central element (49) by at least one spring and **in that** the central element (49) is movably guided relative to the gripper carrier (42).

2. Apparatus according to Claim 1, **characterised in that** the levers (47, 48) are arranged at an angle to a central longitudinal axis (64) of the central element (49).

3. Apparatus according to Claim 1 or 2, **characterised in that** the levers (47, 48) are arranged such that they point forwards at an angle in a direction away from the gripper carrier (42).

4. Apparatus according to one of Claims 1 to 3, **characterised in that** the springs (56, 57) are arranged with spring longitudinal axes (62, 63) at an angle to the central longitudinal axis (64).

5. Apparatus according to one of Claims 1 to 4, **characterised in that** the spring longitudinal axes (62, 63) are arranged such that they point forwards at an angle in a direction away from the gripper carrier (42).

6. Apparatus according to one of Claims 1 to 5, **characterised in that** the central element (49) has a step-shaped contour in a lateral region and **in that** the gripper arms (45, 46) have an outer contour adapted to the contour of the central element (49).

7. Apparatus according to one of Claims 1 to 6, **characterised in that** the gripper arms (45, 46) have a holding contour adapted to the preform (1) in the region of their extent away from the gripper carrier.

8. Apparatus according to one of Claims 1 to 7, **characterised in that** the central element (49) has a pressure face (65) adapted to the outer geometry of the preform (1) in the region of its extent away from the gripper carrier (42).

9. Apparatus according to one of Claims 1 to 8, **characterised in that** the central element (49) has a consumer adapted to a cam control.

10. Apparatus according to one of Claims 1 to 9, **characterised in that** the cam control is designed exclusively for specifying an opening movement of the transport element (41).

11. Apparatus according to one of Claims 1 to 10, **characterised in that**, in a closed state of the transport element (41), the spring longitudinal axis (62, 63) is arranged at an angle to the lever longitudinal axis (60, 61) in such a way that the spring longitudinal axis (62, 63) extends at least partially between the lever longitudinal axis (60, 61) and the central longitudinal axis (64).

12. Apparatus according to one of Claims 1 to 11, **characterised in that**, in an open state of the transport element (41), the spring longitudinal axis (62, 63) extends at least partially on the outer side relative to the central longitudinal axis (64), near to the lever longitudinal axis (60, 61).

## Revendications

1. Dispositif pour le formage par soufflage de récipients (2) qui présente un voie de chauffage (24) pour le chauffage de préformes (1) en matière thermoplastique, et qui est pourvu d'un dispositif de soufflage, qui comprend au moins un poste de soufflage (3) pour la transformation de préformes (1) en récipients (2), et dans lequel, pour le maniement des préformes (1), au moins un élément de transport (41) de type pince est pourvu de deux bras de pince (45, 46), qui sont agencés de manière à pouvoir pivoter par rapport à un support de pince (42), **caractérisé en ce que** chacun des bras de pince (45, 46) est couplé en pivotement, par l'intermédiaire d'au moins un levier (47, 48), avec un élément central (49), qui est disposé, au moins par sections, entre les bras de pince (45, 46), et que chacun des bras de pince (45, 46) sont serrés élastiquement par rapport à l'élément central (49) par au moins un ressort, et que l'élément central (49) est guidé en pouvant être déplacé par rapport au support de pince (42).

2. Dispositif selon la revendication 1, **caractérisé en ce que** les leviers (47, 48) sont disposés de biais par rapport à un axe longitudinal central (64) de l'élément central (49).

3. Dispositif selon revendication 1 ou 2, **caractérisé en ce que** les leviers (47, 48) sont disposés dans une direction opposée au support de pince (45), en étant orientés obliquement en avant.

4. Dispositif selon l'une des revendications 1 à 3, **caractérisé en ce que** les axes longitudinaux (62, 63) des ressorts (56, 57) sont disposés de biais par rapport à l'axe longitudinal central (64).

5. Dispositif selon l'une des revendications 1 à 4, **caractérisé en ce que** les axes des ressorts (62, 63) sont disposés dans une direction opposée au support de pince (42), en étant dirigés obliquement en avant.

6. Dispositif selon l'une des revendications 1 à 5, **caractérisé en ce que** l'élément central (49) présente, dans une zone latérale, un contour étagé, et que les bras de pince (45, 46) présentent un contour extérieur, qui est adapté au contour de l'élément central (49).

7. Dispositif selon l'une des revendications 1 à 6, **caractérisé en ce que** les bras de pince (45, 46) présentent, dans la zone de leur étendue opposée au support de pince, un contour de maintien qui est adapté à la préformes (1).

8. Dispositif selon l'une des revendications 1 à 7, **caractérisé en ce que** l'élément central (49) présente, dans la zone de son étendue opposée au support de pince (42), une surface de pression (65) qui est adaptée à la géométrie extérieure de la préformes (1).

9. Dispositif selon l'une des revendications 1 à 8, **caractérisé en ce que** l'élément central (49) présente un élément détacheur qui est adapté à une commande à came.

10. Dispositif selon l'une des revendications 1 à 9, **caractérisé en ce que** la commande à came est conçue exclusivement pour la détermination d'un mouvement d'ouverture de l'élément de transport (41).

11. Dispositif selon l'une des revendications 1 à 10, **caractérisé en ce que** l'axe longitudinal de ressort (62, 63) est orientés obliquement par rapport à l'axe de levier (60, 61), quand l'élément de transport (41) est à l'état fermé, de sorte que ledit axe longitudinal de ressort (62, 63) s'étende, au moins par sections, entre l'axe de levier (60, 61) et l'axe longitudinal central (64) .

12. Dispositif selon l'une des revendications 1 à 11, **caractérisé en ce que** l'axe longitudinal de ressort (62, 63) s'étend, au moins par sections, sur le côté extérieur par rapport à l'axe longitudinal central (64), à côté de l'axe de levier (60, 61), quand l'élément de transport (41) est à l'état ouvert.
